# EUROPEAN PATENT APPLICATION

(11) **EP 1 394 191 A1**
(43) Date of publication of application: **03.03.2004**
(21) Application number: 02078540.8
(22) Date of filing: 28.08.2002
(51) Int. Cl.: C08G 71/02, C09D 175/02

(54) **Process for preparing biocompatible polyurea**

(71) Applicant: DSM IP Assets B.V., 6411 TE Heerlen (NL)
(72) Inventor: Loontjens, Jacobus Antonius, 6231 KK Meerssen (NL); Maier, Steffen, c/o Albert Ludwigs-Universität, 79104 Freiburg i. Br. (DE); Mülhaupt, Rolf, c/o Albert-Ludwigs-Universität, 79104 Freiburg i. Br. (DE); Zimmermann, Jörg, c/o IvoclarVivadent AC, 9494 Schaan (LI) (LI)
(74) Representative: Mooij, Johannes Jacobus

(57) **Abstract**

A process is provided for preparing urea-containing polymers by contacting a hydroxy-functional organic compound having a functionality of two or more, with a coupling agent in the presence of a strong base, wherein the coupling agent is a carbonylbislactam compound having the general formula (I): 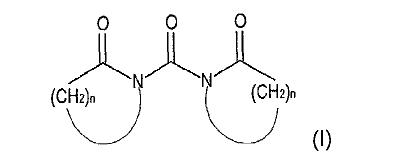 wherein n is an integer from 3 to 15, and that the contacting is conducted at a temperature between 0°C and 100°C. The polymers thus obtained are believed to be new and are useful e.g. in tissue engineering and coatings applications.

## Description

The present invention relates to new biocompatible polyurea polymers and networks of polyurea polymers, made from hydroxy-functional organic compounds. The invention relates also to the use of such polyurea polymers or polymer networks in a variety of applications, for example in tissue engineering and low temperature curable coatings.

### Background art

WO 01/66609 discloses a thermosetting composition containing a functional resin with hydroxy or amino groupsand a functionality of more than 2, a carbonylbislactam compound as crosslinking agent, and usually an acid or a base as a catalyst (especially when hydroxy-terminated resins are cured). According to the description the crosslinking temperature varies between 100 and 200°C and the working examples using a polyester resin comprising 100% isophthalic acid units, carbonylbiscaprolactam, flow benzoin, and optionally a catalyst, illustrate a curing temperature of the powder coating obtained at 200°C.

The reaction of hydroxy-functional polymers and carbonylbislactam at temperatures above 100 °C usually proceeds in analogy with hydroxy-functional polymers and blocked isocyanates.

Furthermore, it is generally known that the crosslinking of resins using a blocked isocyanate as crosslinking agent is conducted at temperatures of about 150°C or more. See, e.g., D.A. Wicks et al., in Progress in Organic Coatings (1999) 36:148-172.

Synthetic biocompatible and bioresorbable polymers such as poly(α-hydroxy acid)s, poly(α-amino acid)s and poly(ester urethane)s have become increasingly important, for example for the development of temporary surgical and pharmaceutical devices, such as wound closure devices, vascular protheses or sustained drug delivery systems. See, e.g., R. Langer and N. Peppas, *J. Macromol. Sci. Rev., Macromol. Chem. Phys.,* 1983, C32, 61; J. Kopeck and U. Ulbrich, *Prog*. *Polym. Sci.,* 1983, 9:1; D.F. Williams, in: Comprehensive PolymerScience, G.C. Eastmond, et al., Eds., Pergamon Press, Oxford, England, 1989; vol. 6, p. 607; J.Y. Zhang, et al., Biomaterials 2000, 21:1247-1258.

Bioresorbable poly(ester urethane)s and poly(ester-urea-urethane)s have been synthesized and are widely used in medical devices (G.A. Abraham, et al., *J. Appl. Poly. Sci.* 1997, 65:1193-1203; T. Kartvelishvili, et al., *Macromol. Chem. Phys.* 1997, 198:1921-1932; G. A. Abraham, et al., *J. Appl. Poly*. *Sci.* 1998, 69:2159-2167). The preparation of such polymers generally involves the use of isocyanates as crosslinking agents which are known to be very toxic and expensive. For example, C.A. Herrick, et al., *J. Allergy and Clin Immun* (2002) 109:873-878 describe a mouse model of diisocyanate-induces asthma showing allergic-type inflammation in the lung after inhaled antigen challenge.

In addition, some of these polymers were observed to produce toxic by-products which have posed severe limitations on their use *in vivo.* For example, urethane formed by reacting poly(D,L-lactide)diol with methylenediphenyl diisocyanate hydrolyses *in vivo* into 4,4'-diaminodiphenylmethane, which reportedly causes hepatitis in humans (D.B. McGill, J.D. Motto, *An industrial outbreak of toxic hepatitis due to methylene-dianiline.* New Engl. J. Med. 1974, 291:278-282).

Despite their toxicity urethanes and urethane ureas were found to possess unique properties which make them ideal for tissue engineering applications. These properties include a wide range of physical and mechanical properties, chemical functionality, and diversity in specific polymer characteristics.

There is therefore a need for a manufacturing process for polyureas and other hydroxy-functional polymers in which harmful reagents, such as toxic isocyanate-based monomers, and undesired by-products are substantially avoided.

It is an object of the present invention to provide such a process, as well as new polyurea polymers and polymer networks which are obtainable by such a process exhibiting similar or even better characteristics as the prior art urethanes and urethane ureas mentioned above.

### Summary of the invention

When investigating alternative routes for manufacturing polyureas, in particular poly(ester urea)s, substantially avoiding the use of isocyanates, it was surprisingly found that carbonylbislactam (CBL) compounds are valuable reactants when reacted with hydroxy-functional organic compounds with a functionality of more than 2 in the presence of a suitable catalyst at temperatures below 100°C, to prepare polymeric materials showing properties that at least equalize those of similar polymers prepared by conventional methods.

Accordingly, the present invention provides a process for preparing a urea-containing polymer by contacting a hydroxy-functional organic compound having a functionality of two or more, with a coupling agent in the presence of a strong base, characterised in that the coupling agent is a carbonylbislactam compound having the general formula (I): 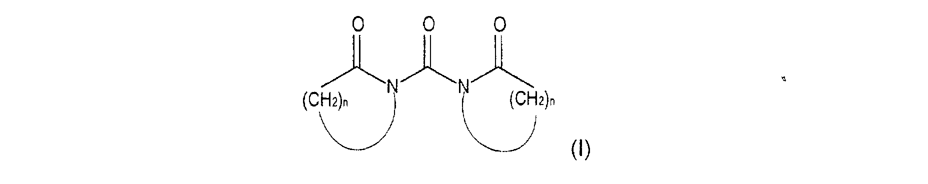 wherein n is an integer from 3 to 15, and that the contacting is conducted at a temperature between 0°C and 100°C.

The reaction conditions are mild, i.e. the reaction is preferably carried out at temperatures ranging between room temperature and about 80°C, mainly depending on the reactivity of the reactants. A more preferred temperature is in the range of 50-60°C. Extreme conditions should be avoided to prevent undesired side-reactions.

A suitable and preferred carbonylbislactam coupling agent is carbonylbiscaprolactam (CBC; see formula I, wherein n = 5).

Suitable hydroxy-functional organic compounds which can be used as starting compound include hydroxy-functional polyethers, hydroxy-functional polyesters, hydroxy-functional polybutadienes, hydroxy-functional poly(meth)acrylates, hydroxy-functional polyolefines, polyvinylalcohols preferably partly esterified, and the like, or combinations thereof.

Suitable and preferred strong bases which can be used as catalysts in the process defined above include compounds with the formulas M(OR)p, M(OH)ₚ, M(R)ₚ, or M(H)ₚ, wherein M is a metal from Groups I, II or III of the Periodic System, p = 1-3, and R is C₁₋₂₀ alkyl or C₁₋₂₀ aryl(alkyl).

The resulting cross-linked polymers have beneficial properties and can be used in a variety of applications, in particular tissue engineering and coating applications, preferably in low temperature curable powder coatings, of course depending on the reactivity of the selected starting compounds and the reaction conditions.

According to another aspect of the invention new polyurea polymers and polymer networks are provided having the following repeating unit, 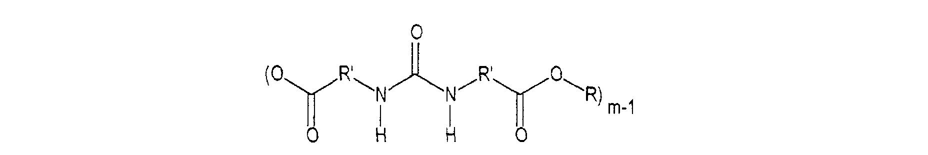 based on a carbonyl bislactam compound having the general formula (I) and a multifuctional alcohol R(OH)ₘ in which m = functionality and R' represents (CH₂)ₙ.

These and other objects of the present invention will be explained in further detail below.

### Brief description of the drawings

Figure 1 shows a micrograph of adherent and spread fibroblasts on PEU0, Scale bar 200 µm.
Figure 2 shows the influence of the temperature on the polymer composition according to the present invention.

### Detailed description of the invention

According to one aspect of the present invention a new isocyanate-free synthetic route to polyurea polymers and in particular poly(ester urea)s is provided which is primarily based on polyols commonly used in polyurethane chemistry.

It has been surprisingly found that the reaction between polyols and carbonylbislactams (CBLs) in the presence of a strong alkaline catalyst occurs relatively smoothly under mild conditions, i.e. at ambient or elevated temperatures, and results in the opening of both lactam rings as will be further explained below. Accordingly, this reaction can be conveniently used for the preparation of polyureas and polyurea networks which are known to have, inter alia, useful mechanical properties, good temperature stability, and hydrolytic resistance. In addition, these networks are biocompatible since essentially no harmful isocyanate compounds are involved in the reaction.

As far as the inventors are aware, the reaction type of CBL with polyols resulting in the opening of the two lactam rings does not belong to the state of the art, and the resulting polymer compounds and polymer networks are therefore considered novel.

The process according to the present invention can be used for the coupling of a variety of substances having two or more hydroxy-functional groups, also referred to herein as polyol compounds. Preferred starting compounds having such functional hydroxy groups include hydroxy-functional polyethers, such as polyethylene glycols (PEG), polypropylene glycols, polytetrahydrofurans, and the like; hydroxy-functional polyesters, for example aliphatic polyesters, such as polycaprolactones and polybutylene adipates, or aromatic polyesters, such as polymers of ethylene glycol, propylene glycol, neopentyl glycol, butanediol, and the like, with terephthalic or isophthalic acid, and the like; hydroxy-functional polybutadienes; hydroxy-functional poly(meth)acrylates, hydroxy-functional polyolefines, polyvinylalcohols preferably partly esterified, and the like, or combinations thereof. The number of functional hydroxy groups in the starting polymers, m, may vary, frequently in view of the final product aimed and its desired properties, and is usually in the range between 2 and 20 per chain of the starting polymer, more preferably from 2 to 10, and most preferably from 2 to 4.

Suitable and preferred strong bases which are used in the process of the present invention include metal hydrides, metal hydroxides, metal alkylates, and metal alcoholates, where the metal is Li, Na, K, Ti, Zr, Al, Zn, Mg, and the like, the metal alkylate is a metal C₁₋₂₀ alkylate, for example n-butyl lithium, and the alcohol forming the metal alcoholate is a C₁₋₂₀ alkyl alcohol or a C₁₋₂₀ aryl(alkyl) alcohol, for example, methanol, ethanol, n- and isopropylalcohol, benzylalcohol, and the like; metal alkyls, such as n-butyl lithium, and the like. However, other strong bases such as NR_{q}H_{4-q}OH (R is C₁₋₂₀alkyl and q = 1-4), tertiary amines including triethylamine, tributylamine, trihexylamine, trioctylamine, guanidine, cyclic amines sus as diazobicyclo[2,2,2]octane (DABCO), dimethylaminopyridine (DMAP), and morfoline, and the like, are also suitable.

The functionality of the starting hydroxy-functional organic compounds is two or more, preferably more than 2.5, most preferably more than 3.

Low-temperature thermosetting polyester coatings which can be produced by the present invention predominantly contain curable polyester resins which are carboxy- and hydroxy-functional to ensure a crosslinking reaction. A wide range of polyesters allow a combination of useful properties such as tunable reactivity, color stability, appearance, corrosion resistance and weathering performance.

The reaction of the polyol compound(s) and the carbonylbislactam compound, in particular CBC, is preferably carried out in about stoichiometric amounts of functional hydroxy groups : carbonylbislactam of 2:1, but the ranges are not very critical and may further vary, for example, from 4:1 to 1:2.

It may be convenient if the process is carried out in a solvent. Suitable solvents include toluene, xylene, tetrahydrofuran, and the like.

The amount of catalyst to be used is not very critical either and may vary, for example, in the range from 10⁻² to 10 mol percent. A preferred range is from 5x10⁻² to 3 mol percent.

The reaction conditions of the process according to the invention are relatively "mild", i.e. the reaction frequently proceeds to completion at room temperature within a few minutes, of course depending on the reactivity of the reactants and the selection of the catalyst. Therefore, the reaction is conveniently carried out between room temperature and about 80°C, more preferably between 50 and 60°C. Suitable reaction times are ranging between about a few minutes, or less, to about 5 hours, more preferably from 1 minute to 3 hours, and most preferably from 5 minutes to 1 hour. Care has to be taken to avoid more extreme, especially higher temperatures, since this may result in the elimination of a lactam ring of the coupling agent rather than the opening of the ring.

The reaction conditions as well as the selection and amounts of reactants including the catalyst can be easily optimized by a person skilled in the art without inventive effort or undue experimentation.

The reaction of CBC with hydroxy-functional organic compounds according to the process of the present invention is conveniently used for the preparation of polymers and polymer networks, e.g. based on commercial diols and triols usually applied in polyurethane formulations. The reaction of CBC with polyols usually occurs in analogy to the reaction of blocked diisocyanates and polyols in polyurethane chemistry. In contrast to the formation of urethanes in conventional polyurethane chemistry the substitution of diisocyanates for CBC results in the formation of poly(ester urea)s.

As a typical example of the process according to the present invention CBC/ polypropylene oxide based triol formulations are conveniently mixed at room temperature with about 4 mol.% sodium alcoholate of the polyol and cured at 50°C for 10 min. The obtained poly(ester urea) networks show a thermal stability up to 325°C (5% weight loss) and rubber-like mechanical properties. Although the process according to the present invention generally proceeds rapidly in the temperature range defined at relatively short reaction times, post-curing may be conducted at higher temperatures (usually above 100°C, for example 150°C) to fully complete the reaction.

The ability of the polymerized poly(ester urea)s to support cell adhesion and cell growth was examined. The polymer networks support cell adhesion and cell growth. Grown fibroblasts retain their morphology similar to the cells grown on tissue culture polystyrene. Therefore, this novel synthetic material is non-toxic and offers attractive potential for tissue engineering applications.

Carbonylbislactam compounds and in particular CBC represents an attractive and very versatile intermediate to produce polyureas, without requiring the use of isocyanates. The mechanical properties, the excellent biocompatibility and the degradation behaviour of the poly(ester urea)s make them interesting materials for the substitution of polyurethanes in medical applications.

Likewise, cross-linking CBC/polyester formulations according to the present process will result in coating compositions which can be cured at much lower temperatures.

Although the present inventors do not wish to be bound to any theory on reaction mechanisms, it is believed that the present process proceeds through ring opening of both lactam rings of the coupling agent. In order to obtain information on the reaction mechanism the conversion of CBC and three monovalent alcohols, methanol, ethanol and 2-propanol, respectively, with alcoholate catalysis was monitored by FT-IR, ¹H- and ¹³C-NMR spectroscopy. The reaction of CBC and alcohol in the presence of the corresponding alcoholate as catalyst occurs by quantitative ring opening addition of two equivalents of alcohol. This reaction behaviour was observed for methanol, ethanol and 2-propanol. No side reactions were observed at ambient temperature, a purification of the products was not necessary. This seems to confirm that CBC reacts with alcohol under alcoholate catalysis by a ring opening addition reaction.

Accordingly, the process of the present invention may be generally represented as follows: 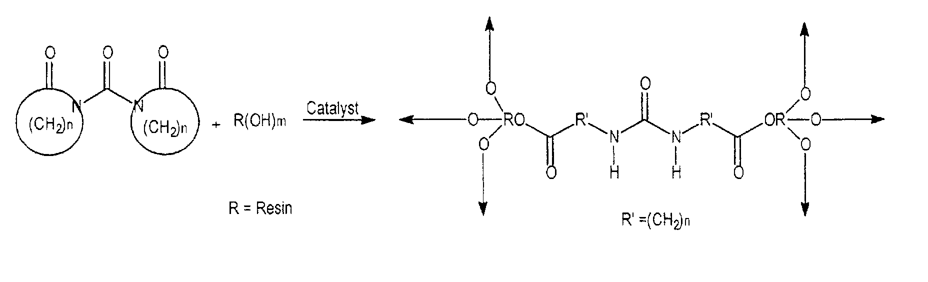 An additional advantage of the process of the present invention is that it provides a process for coating purposes wherein no lactam is released.

### Experimental

### General

N,N'-carbonylbis(caprolactam) (DSM), methanol, ethanol, 2-propanol, lauryl alcohol and sodium hydride (all from Fluka) were used as received. The two trihydroxy-functional block copolymers of poly(propylene oxide) with poly(ethylene oxide) end segments, Baygal® K55 (Mₙ= 440 g/mol) and Baygal® K390 (Mₙ= 4800 g/mol) (both from Bayer), were dried in a vacuum mixer at 80°C for 5 h.

FT-IR spectroscopy was carried out using a Bruker IFS 88 spectrometer equipped with a temperature chamber and a Golden Gate single reflection ATR unit. TGA measurements were performed using a Netzsch STA 409.

¹H and ¹³C NMR spectra were recorded in CDCl₃ at concentrations of 100 mg/ml on a Bruker ARX 300 spectrometer, operating at 300 MHz and 75.4 MHz, respectively. Melting points were determined using a Büchi Melting Point B540 apparatus.

Differential scanning calorimetry measurements were performed on a Perkin Elmer DSC-7. Glass transition temperatures *(T*_{*g*}*)* were taken from the second heating run at a heating rate of 10 K/min. The measurements were performed from - 100°C up to 30°C.

Flexural strength and modulus were measured using an Instron 4204 universal testing machine.

### Example 1 (model example only)

### Preparation of 6,6'-uretylene-di-hexanoic acid dimethyl ester

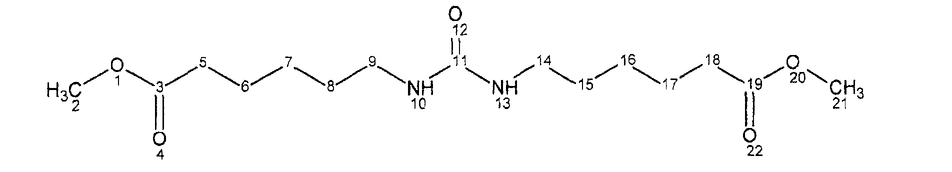

0.4 ml (10 mmol) of a potassium methanolate solution (4%), prepared by stirring 2.45 g potassium in 250 ml of methanol, were added to a solution of 2.52 g (10 mmol) CBC in 10 ml methanol. The mixture was stirred for 10 h at ambient temperature. Then 3g of acidic ion exchange resin Amberlite IR 120 (Fluka) were added to neutralize the reaction mixture. After 15 min the ion exchange resin was filtered off and the solvent was removed under reduced pressure, The product was dried *in vacuo* at 60°C and characterized without purification by ¹H NMR, ¹³C NMR, FTIR spectroscopy, and melting point measurements.

The ¹H NMR spectrum of the product obtained was recorded (not shown here). All ¹H NMR signals of CBC at 3.8, 2.6, 1.8 and 1.7 ppm disappeared. New signals of the adduct were observed at 4.7, 3.6, 3.1, 2.2, 1.6, 1.4 and 1.3 ppm. It was demonstrated that the reaction between CBC and methanol occurs by ring opening addition reaction, thus producing the title compound in quantitative yield. No side reactions were observed at ambient temperature and purification of the product was not necessary. Additional characterization by FT-IR and melting point measurement provided additional experimental evidence for the formation of 6,6'-uretylene-di-hexanoic acid dimethyl ester.

Title compound: C₁₅H₂₈N₂O₅ (316 g/mol); m.p. 101°C-103°C, IR: 1730 cm⁻¹, (s C=O ester), 1617 cm⁻¹, (s C=O urea), 1576 cm⁻¹, (s amide II, urea); ¹H NMR: δ= 4.7 (t, 10, 13), 3.6 (s, 2. 21), 3.1 (q, 9, 14), 2.2 (t, 5, 18), 1.6 (m, 8, 15), 1.4 (m, 6, 17), 1.3 (m, 7, 16); ¹³C-NMR: δ= 174.0 (19, 3), 158,6 (11), 51.4 (2, 21), 40.0 (14, 9), 33.8 (5, 18), 29.9 (8, 15), 26.3 (6, 17), 24.5 (7, 16).

### Example 2

### Preparation of 6,6'-uretylene-di-hexanoic acid diethyl ester (model example only)

In a similar manner as described in Example 1, however using ethanol instead of methanol, the title compound was obtained.

Title compound: C₁₇H₃₂N₂O₅ (344 g/mol); m.p. 64°C-66°C, IR: 1734 cm⁻¹, (s C=O ester), 1617 cm⁻¹, (s C=O urea), 1589 cm⁻¹, (s amide II, urea); ¹H NMR: δ = 4.1 (q, 22, 2), 3.1 (t, 10, 15), 2.2 (t, 6, 19), 1.6 (m, 9, 16), 1.5 (m, 7, 18) 1.3 (m, 8, 17), 1.2 (t, 3, 23); ¹³C-NMR: δ= 173.7 (20, 4), 158.9 (12), 60.2 (2, 22), 40.2 (15, 10), 34.1 (6, 19), 29.7 (9, 16), 26.3 (7, 18), 24.4 (8, 17).

### Example 3 (model example only)

### Preparation of 6,6'-uretylene-di-hexanoic acid diisopropyl ester

In a similar manner as described in Example 1, however using isopropylalcohol instead of methanol, the title compound was obtained.

Title compound: C₁₉H₂₆N₂O₅ (372 g/mol); m.p. 58°C-59°C, IR: 1731 cm⁻¹, (s C=O ester), 1617 cm⁻¹, (s C=O urea), 1572 cm⁻¹, (s amide II, urea); ¹H NMR: δ = 4.9 (m, 2, 23), 4.5 (t, 12, 15), 3.1 (q, 11, 16), 2.2 (t, 7, 20), 1.6 (m, 10, 17), 1.5 (m, 8, 19) 1.3 (m, 9, 118) 1.2 (d, 3, 6, 24, 26); ¹³C-NMR: δ= 173.2 (21. 4), 158.4 (13), 67.5 (2, 23), 40.2 (11. 16), 34.5 (7, 20), 29.8 (10, 17), 26.3 (8, 19), 24.6 (9, 18), 21.8 (3, 6, 24, 26).

### Example 4 (model example only)

### Temperature-dependency of the double ring-opening reaction

Carbonylbis(caprolactam), 1.26 g (5 mmol), and 1.865 g of lauryl alcohol (10 mmol) were reacted with 12 mg (0.5 mmol) of sodium hydride as a catalyst in a twinscrew microcompounder for 10 minutes at 30, 50, 70, 90, and 110°C, respectively. The products obtained were identified as described above.

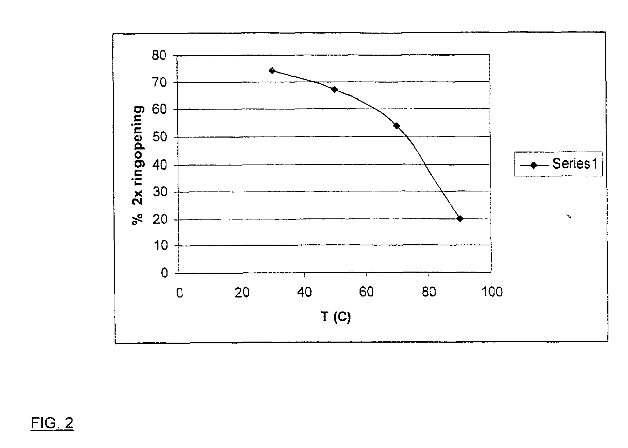

As illustrated in Figure 2, it was observed that at the lower temperatures the ring opening of both lactam groups of CBC is the favoured reaction pathway. At 30°C, 74% "double ring-opened" CBC were produced. Only 26% of the intermediate single ring-opened CBC underwent ring-elimination to produce urethane. Upon raising the temperature, the double ring-opened CBC decreased and was reduced to zero at 110°C (not shown).

### Example 5

### Preparation of CBC based poly(ester urea) networks

A polymerization experiment was conducted using Baygal® K55 (Mₙ = 440 g/mol) (PPO1) and Baygal® K390 (Mₙ = 4800 g/mol) (PPO2), two polypropylene oxide based triols, as typical examples of suitable polyols. The compositions and properties of these polyols are listed in Table 1.

**Table 1**

| Composition and properties of the used polyols | | |
|---|---|---|
| | Baygal® K55 | Baygal® K390 |
| Mₙ (g/mol) | 440 | 4800 |
| Number of hydroxy groups per molecule | 3 | 3 |
| DPₙ(PO)^{a)} | 5 | 69 |
| DPₙ (EO)^{a}) | 1 | 15 |

| | | |
|---|---|---|
| ^{a})DP: degree of polymerization, represents the average number (= index n) of ethylene oxide (EO) and propylene oxide (PO) units. | | |

16.54 g (65.6 mmol) solid CBC were mixed with 90 g (18.75 mmol) Baygal K390. After heating to 120°C for 5 min under stirring to homogenize the mixture, it was cooled to 40°C under stirring. 10 g (22.7 mmol) partially deprotonated Baygal K55, prepared by adding 138 mg (5.75 mmol) sodium hydride to 10 g (22.7 mmol) Baygal K55, were added and the mixture was stirred for further 5 min. The transparent mixture was poured into a heated (50°C) mould (200 mm x 200 mm x 4 mm) and cured at 50°C for 10 min and post-cured overnight at 125°C.

The resulting polymer networks were investigated with respect to their mechanical properties, thermal stability, degradation and swelling behaviour and biocompatibility. The formulation of the different samples and the mechanical properties are listed in Table 2. The **p**oly-**e**sther-**u**rea samples are named PEUx with x referring to the molar percentage of PPO1 used with respect to the total molar amount of PPO1 and PPO2. For comparison of polyurethane and CBC chemistry the mechanical data of sample PU0, a common polyurethane prepared from PPO2 as polyol and methylene diphenylene diisocyanate (Desmodur PU1806, Bayer AG) as diisocyanate are also listed in Table 2.

**Table 2**

| Formulation and mechanical properties of the prepared poly(ester urea)s. | | | | | | |
|---|---|---|---|---|---|---|
| Sample Name | PU0 | PEU0 | PEU10 | PEU20 | PEU50 | PEU100 |
| Baygal® K55 [wt.%] | | 0 | 8.6 | 6 | 33 | 51.4 |
| Baygal® K390 [wt.%] | 1.9 | 92.7 | 7.2 | 4 | 3 | 0 |
| CBC [wt.%] | 8.1* | 7.3 | 14.2 | 0 | 4 | 48.6 |
| Appearance | yellowish | transparent | transparent | opaque | opaque | transparent |
| Tg [°C] | n.d. | -61 | -59 | -60/-12 | -59 /-8 | -20 |
| TGA [°C] [5 % weight loss] | 314 | 325 | 317 | 300 | 274 | 189 |
| Young's modulus [N/mM²] | 3.6 | 0.79 | 1.59 | 0.92 | 2.04 | 4.45 |
| Tensile strength at break | 0.8 | 0.52 | 0.54 | 0.62 | 1.02 | 0.90 |
| [N/mm²] | | | | | | |
| Elongation at break [%] | 65 | 134 | 50 | 27 | 82 | 26 |

| | | | | | | |
|---|---|---|---|---|---|---|
| * methylene diphenylene diisocyanate [wt.%] n.d. : not detected | | | | | | |

The mechanical properties of PU0 and PEU0 are comparable. The CBC-based system shows a lower Young's modulus and tensile strength at break. In contrast the elongation at break increased. PEU0 and PEU10 show the same temperature stability as the corresponding PUO.

The mechanical properties of polyurethanes are primarily influenced by the polyols used. The polyol composition for the CBC formulations was modified in analogy. The amount of low molecular weight polyol, PPO1 was increased from 0 to 100 wt.% due to the amount of polyol. As shown in Table 2, the amount of CBC was also raised with increasing amount of PPO1.

In conclusion, the crosslinked poly(ester urea)s which are prepared by the method of the present invention have mechanical properties which are similar or identical to those obtained by conventional production methods usually involving harmful isocyanate compounds, whereas the biocompatibility and degradation behaviour of the material is much better, which makes this material extremely useful for biomedical applications.

### Biocompatibility

The ability of the polymerized CBC-polyol-networks to support cell adhesion and cell growth was investigated using a human fibroblast cell line (HS 27).

Thin slices of the hydrogels to be investigated were immersed in 70% ethanol for 30 min for sterilization and subsequently equilibrated with cell culture medium (DMEM, Gibco).

At day 1 cells were seeded in a density of 40,000 cells per cm² in a volume of 50 µl on the top of the hydrogel surface. After 1h incubation in a humidified incubator at 37°C equilibrated with 5% CO₂, 2 ml of cell culture medium (DMEM supplemented with 10% fetal bovine serum, penicillin 100 U/ml and streptomycin 100 µg/ml) were carefully added to each well. Gels containing cells on their surface were incubated in a humidified incubator at 37°C equilibrated with 5% CO₂.

At day 4 staining with propidium iodide was performed to visualize viable adherent cells. Briefly, gels were fixed in ice-cold 70% ethanol for 10 min. After washing with phosphate buffered saline (3x5 min) the gels were incubated in a propidium iodide solution (8 µg/ml in phosphate buffered saline) in the dark for 30 min. After a second washing step (3x5 min in PBS) nuclear staining was evaluated using a fluorescence microscope (excitation 510-560 nm).

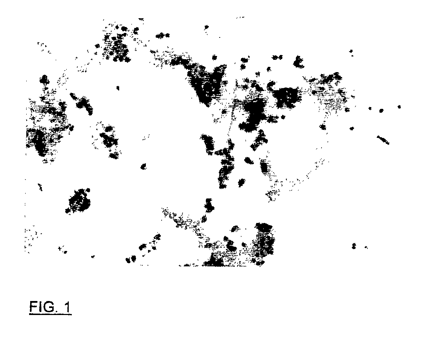

The image of the PEU 0 sample (Figure 1) shows that after seeding the cells spreaded on the polymer surfaces and gradually adhered to the polymer surface within a few hours. The fibroblasts retained their morphology after continuous culture of fibroblasts on hydrogels for 4 days, similar to the cells grown on tissue culture polystyrene. Since the cells that adhered on the polymer surface remained healthy, the polymerized CBC-polyol-networks are considered non-toxic in vitro.

## Claims

1. A process for preparing a urea-containing polymer by contacting a hydroxy-functional organic compound having a functionality of two or more, with a coupling agent in the presence of a strong base, **characterised in that** the coupling agent is a carbonylbislactam compound having the general formula (I): 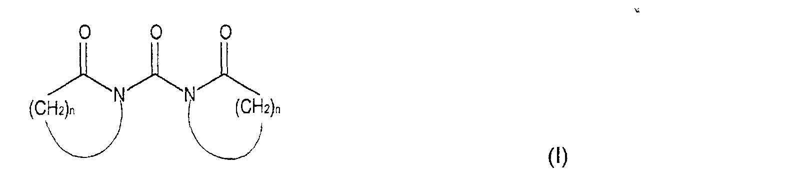 wherein n is an integer from 3 to 15, and that the contacting is conducted at a temperature between 0°C and 100°C.

2. A process according to claim 1, wherein the temperature ranges between room temperature and 80°C, more preferably between 50 and 60°C.

3. A process according to claim 1 or 2, wherein the carbonylbislactam compound is carbonylbiscaprolactam (CBC).

4. A process according to any one of claims 1 to 3, wherein the strong base is at least one compound of the formula M(OR)ₚ, M(OH)ₚ, M(R)ₚ, or M(H)ₚ, wherein M is a metal from Groups I, II or III of the Periodic System, p = 1-3, and R is C₁₋₂₀ alkyl or C₁₋₂₀ aryl(alkyl).

5. A process according to any one of claims 1 to 4, wherein the hydroxy-functional organic compound is selected from the group consisting of hydroxy-functional polyethers, hydroxy-functional polyesters, hydroxy-functional polybutadienes, hydroxy-functional poly(meth)acrylates, hydroxy-functional polyolefines, polyvinylalcohols preferably partly esterified, or combinations thereof.

6. A polymer composition comprising a polymer with the following repeating unit, 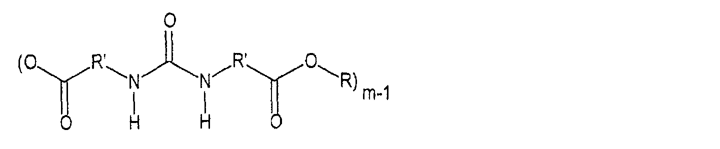 based on a carbonyl bislactam compound having the general formula (I) and a multifuctional alcohol R(OH)ₘ in which m = functionality and R' represents (CH₂)ₙ.

7. Use of a polymer composition as defined in claim 6 or as obtained by the process of any one of claims 1 to 5, for tissue engineering.

8. Use of a polymer composition as defined in claim 6 or as obtained by the process of any one of claims 1 to 5, for coatings purposes.
